# EUROPÄISCHE PATENTSCHRIFT

(11) **EP 1 475 550 B1**
(45) Veröffentlichungstag und Bekanntmachung des Hinweises auf die Patenterteilung: **07.12.2005**
(21) Anmeldenummer: 04009758.6
(22) Anmeldetag: 24.04.2004
(51) Int. Cl.: F16D 13/75, F16D 21/06

(54) **Reibungskupplung**
Friction clutch
Embrayage à friction

(30) Priorität: 06.05.2003 DE 10319999
(43) Veröffentlichungstag der Anmeldung: 10.11.2004
(73) Patentinhaber: ZF Sachs AG, 97424 Schweinfurt (DE)
(72) Erfinder: Feldhaus, Reinhard, 97464 Niederwerrn (DE); Conrad, Matthias, 97273 Kürnach (DE); Kister, Igor, 97076 Würzburg (DE); Hirschmann, Frank, 97464 Niederwerrn (DE); Vogt, Sebastian, 97616 Bad Neustadt (DE); Orlamünder, Andreas, 97422 Schweinfurt (DE); Carlson, Cora, 97456 Dittelbrunn (DE)

(56) Entgegenhaltungen:
- US-A- 5 123 512
- US-A- 5 404 979
- US-A1- 2003 062 237
- PATENT ABSTRACTS OF JAPAN Bd. 2000, Nr. 13, 5. Februar 2001 (2001-02-05) & JP 2000 274448 A (EXEDY CORP), 3. Oktober 2000 (2000-10-03)

## Beschreibung

Die vorliegende Erfindung betrifft eine Reibungskupplung, umfassend eine Gehäuseanordnung, eine in der Gehäuseanordnung in Richtung einer Drehachse bewegbar gehaltene Anpressplatte, eine sich bezüglich der Gehäuseanordnung und der Anpressplatte abstützende Kraftbeaufschlagungsanordnung, eine Verschleißnachstellvorrichtung im Kraftübertragungsweg zwischen der Anpressplatte und der Kraftbeaufschlagungsanordnung, umfassend wenigstens ein zur Verschleißnachstellung verlagerbares Nachstellelement, ein an der Anpressplatte vorgesehenes Erfassungselement, das mit einem Erfassungsabschnitt bei Auftreten von Verschleiß in Anlage an einem Anschlag kommen kann und dabei bezüglich der Anpressplatte bewegbar ist, ein keilartiges Arretierelement, welches das Erfassungselement nach Bewegung bezüglich der Anpressplatte gegen Rückbewegung arretiert, wobei das Arretierelement durch eine Vorspannanordnung in Richtung zu einem das Erfassungselement gegen Rückbewegung arretierenden Zustand vorgespannt ist. Eine solche Reibungskupplung ist aus US 2003/0062237 A1 bekannt.

Bei Antriebssystemen, bei welchen zunehmend Systembereiche, wie z.B. das Getriebe und die Reibungskupplung automatisiert, betätigt werden, gewinnt das Konstanthalten der Betätigungscharakteristiken dieser Systembereiche eine zunehmende Bedeutung. Im Bereich der Reibungskupplung ist insbesondere der in Form des Abriebs von Reibbelägen auftretende Verschleiß problematisch, da durch diesen auftretenden Verschleiß Komponenten ihre Einbaulage ändern, was eine entsprechend geänderte Betätigungscharakteristik zur Folge hat. Um diesem Problem entgegenzuwirken, ist es bekannt, Verschleißnachstellvorrichtungen einzusetzen, die dafür sorgen, dass, obgleich durch Auftreten von Verschleiß beispielsweise eine Anpressplatte über die Betriebslebensdauer hinweg ihre Lage ändern wird, diejenigen Systembereiche, auf welche ein Betätigungssystem einwirkt bzw. welche eine Einrückkraft erzeugen, in einer hinsichtlich der Krafterzeugung konstanten Einbaulage gehalten werden können. Derartige Verschleißnachstellvorrichtungen umfassen beispielsweise ringartig aufgebaute Nachstellelemente, die axial gestaffelt bezüglich der Anpressplatte angeordnet sind und somit im Kraftübertragungsweg bzw. auch Beaufschlagungsweg zwischen Anpressplatte und Kraftbeaufschlagungsanordnung liegen.

Beim Einsatz in modernen Antriebssystemen mit sogenannten Doppelwellengetrieben werden Doppelkupplungen eingesetzt, durch welche wahlweise der Antrieb, also eine Brennkraftmaschine, mit einer der beiden Getriebeeingangswellen gekoppelt werden kann. Derartige Reibungskupplungen, auch als Doppelkupplungen bekannt, umfassen zwei allgemein axial gestaffelte Kupplungsbereiche, die entsprechendes axiales Volumen beanspruchen.

Ziel der vorliegenden Erfindung ist es, eine derartige Reibungskupplung mit der Möglichkeit, auftretenden Verschleiß zu kompensieren, so auszugestalten, dass der beanspruchte axiale Bauraum vermindert werden kann.

Erfindungsgemäß wird diese Aufgabe gelöst durch eine Reibungskupplung, umfassend eine Gehäuseanordnung, eine in der Gehäuseanordnung in Richtung einer Drehachse bewegbar gehaltene Anpressplatte, eine sich bezüglich der Gehäuseanordnung und der Anpressplatte abstützende Kraftbeaufschlagungsanordnung, eine Verschleißnachstellvorrichtung im Kraftübertragungsweg zwischen der Anpressplatte und der Kraftbeaufschlagungsanordnung, umfassend wenigstens ein zur Verschleißnachstellung verlagerbares Nachstellelement, ein an der Anpressplatte vorgesehenes Erfassungselement, das mit einem Erfassungsabschnitt bei Auftreten von Verschleiß in Anlage an einem Anschlag kommen kann und dabei bezüglich der Anpressplatte bewegbar ist, ein keilartiges Arretierelement, welches das Erfassungselement nach Bewegung bezüglich der Anpressplatte gegen Rückbewegung arretiert, wobei das Arretierelement durch eine Vorspannanordnung in Richtung zu einem das Erfassungselement gegen Rückbewegung arretierenden Zustand vorgespannt ist, wobei das wenigstens eine Nachstellelement und die Anpressplatte bezüglich einander radial gestaffelt angeordnet sind.

Durch das radiale Staffeln einer Anpressplatte und einer damit zusammenwirkenden Verschleißnachstellvorrichtung kann zwischen diesen beiden Baugruppen ein Überlapp in axialer Richtung erzeugt werden, der dazu führt, dass entsprechend dem vorhandenen Überlapp die axiale Baugröße der Reibungskupplung bei ansonsten gleicher Ausgestaltung gemindert werden kann.

Um insbesondere das Zusammenwirken der Kraftbeaufschlagungsanordnung mit der Anpressplatte bzw. der Verschleißnachstellvorrichtung einfach gestalten zu können, wird vorgeschlagen, dass das wenigstens eine Verschleißnachstellelement radial außen bezüglich der Anpressplatte angeordnet ist.

Bei radialer Staffelung des wenigstens einen Verschleißnachstellelements und der Anpressplatte, insbesondere bei Anordnen des Nachstellelements radial außen bezüglich der Anpressplatte, kann es schwierig sein, eine Formation bereitzustellen, welche die Fliehkrafteinwirkung auf das Nachstellelement aufnimmt. Es wird daher vorgeschlagen, dass das wenigstens eine Nachstellelement ein Nachstellring ist, welcher auf Grund seines geschlossenen ringartigen Körpers Fliehkräfte in sich selbst aufnimmt.

Um die Einrückkräfte zwischen der Kraftbeaufschlagungsanordnung und der Anpressplatte übertragen zu können, wird vorgeschlagen, dass an der Anpressplatte wenigstens ein das wenigstens eine Nachstellelement axial stützender und radial vorspringender Stützbereich vorgesehen ist. Es sei hier darauf hingewiesen, dass gleichwohl im Sinne der vorliegenden Erfindung bei teilweise nach radial außen greifenden und die Verschleißnachstellvorrichtung zumindest teilweise auch radial übergreifenden Bereichen der wesentliche Körperabschnitt der Anpressplatte bezüglich der Verschleißnachstellvorrichtung weiterhin als radial gestaffelt zu betrachten ist.

Der Anschlag, mit welchem das Erfassungselement bei auftretendem Verschleiß zusammenwirken kann, kann vorzugsweise an der Gehäuseanordnung feststehen.

Die Effekte der vorliegenden Erfindung kommen besonders dann zu tragen, wenn eine Zwischenplatte vorgesehen ist, an deren beiden axialen Seiten jeweils eine Anpressplatte eines jeweiligen Kupplungsbereichs einer Doppelkupplung vorgesehen ist, wobei die Zwischenplatte für wenigstens einen Kupplungsbereich ein Widerlager bildet, wobei jeder Anpressplatte eine Kraftbeaufschlagungsanordnung zugeordnet ist und im Kraftübertragungsweg zwischen wenigstens einer Anpressplatte und der zugeordneten Kraftbeaufschlagungsanordnung eine Verschleißnachstellvorrichtung mit zugeordnetem Arretierelement und Erfassungselement vorgesehen ist. Selbstverständlich kann auch bei herkömmlichen Einfachkupplungen die vorliegende Erfindung sehr vorteilhaft sein, um auch dabei axialen Bauraum einsparen zu können, oder um beispielsweise mehr axialen Bauraum für dickere Kupplungsbeläge bereitstellen zu können.

Insbesondere beim Aufbau der Reibungskupplung als sogenannte Doppelkupplung wird weiter vorgeschlagen, dass eine der Kraftbeaufschlagungsanordnungen die Zwischenplatte axial überbrückt und dass wenigstens im Kraftübertragungsweg zwischen dieser Kraftbeaufschlagungsanordnung und der dadurch beaufschlagten Anpressplatte eine Verschleißnachstellvorrichtung mit zugeordnetem Arretierelement und Erfassungselement vorgesehen ist.

Die vorliegende Erfindung wird nachfolgend mit Bezug auf die beiliegenden Zeichnungen beschrieben. Es zeigt:
- Fig. 1: eine Teil-Längsschnittansicht einer erfindungsgemäß aufgebauten Doppelkupplung;
- Fig. 2: eine Detail-Längsschnittansicht der erfindungsgemäßen Doppelkupplung in einer anderen Ebene geschnitten;
- Fig. 3: eine Ansicht der erfindungsgemäßen Doppelkupplung von radial außen, teilweise geschnitten;
- Fig. 4: eine Detailansicht der auch in Fig. 2 erkennbaren Anpressplatte;
- Fig. 5: eine Axialansicht des in Fig. 4 dargestellten Details;
- Fig. 6: eine der Fig. 1 entsprechende Ansicht einer alternativen Doppelkupplung;
- Fig. 7: eine weitere alternative Ausgestaltungsform einer Doppelkupplung.

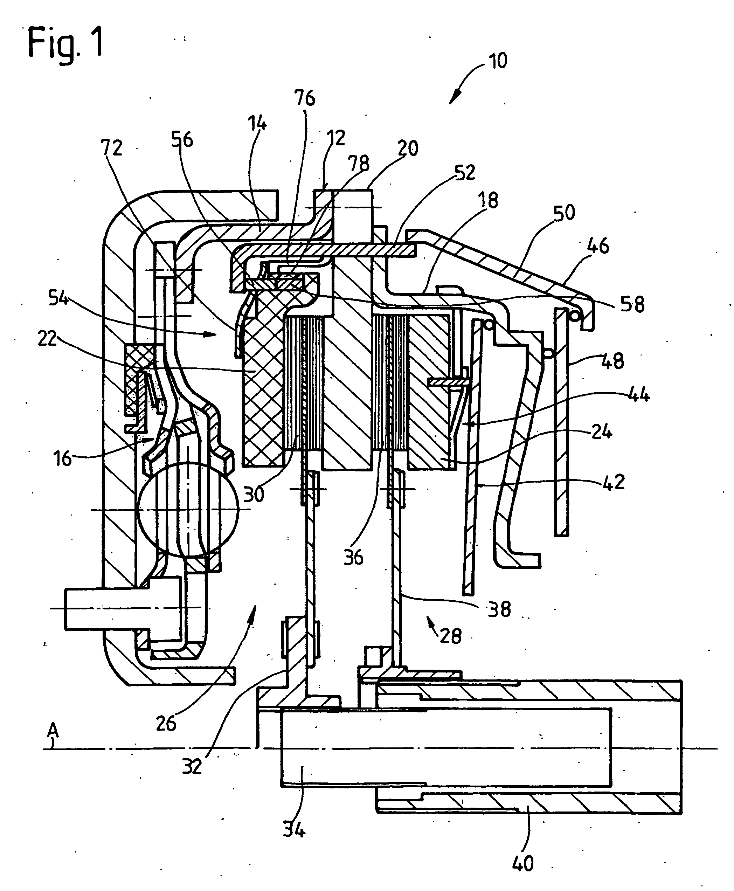

In Fig. 1 ist eine erfindungsgemäß ausgestaltete Doppelkupplung allgemein mit 10 bezeichnet. Die Doppelkupplung 10 umfasst eine Gehäuseanordnung 12 mit einem ersten Gehäuseteil 14, das über eine Torsionsschwingungsdämpferanordnung 16 zur gemeinsamen Drehung mit einer Kurbelwelle oder einer sonstigen Antriebswelle gekoppelt werden kann. Weiter ist ein zweites Gehäuseteil 18 vorgesehen, wobei die beiden Gehäuseteile 14, 16 an den beiden axialen Seiten einer Zwischenplatte 20 positioniert sind und damit fest verbunden sind. In der so gebildeten Gehäuseanordnung der Doppelkupplung 10 sind die beiden Anpressplatten 22, 24 der beiden Kupplungsbereiche 26, 28 der Doppelkupplung 10 vorgesehen. Die beiden Anpressplatten 22, 24 können beispielsweise mit den Gehäuseteilen 14 bzw. 18 oder auch der Zwischenplatte 20 drehfest, bezüglich der Zwischenplatte 20 jedoch axial bewegbar gekoppelt sein. Hierzu können sogenannte Tangentialblattfedern oder dergleichen eingesetzt werden. Zwischen der Anpressplatte 22 des Kupplungsbereichs 26 und der Zwischenplatte 20 liegen die Reibbeläge 30 einer Kupplungsscheibe 32 des Kupplungsbereichs 26. Die Kupplungsscheibe 32 ist mit einer ersten Getriebeeingangswelle 34 eines nicht dargestellten Getriebes zur gemeinsamen Drehung um die Drehachse A gekoppelt.

Zwischen der Anpressplatte 24 des Kupplungsbereichs 28 und der Zwischenplatte 20 liegen die Reibbeläge 36 einer Kupplungsscheibe 38. Diese Kupplungsscheibe 38 des Kupplungsbereichs 28 ist mit einer zweiten Getriebeeingangswelle 40, welche die erste Getriebeeingangswelle 34 koaxial umgebend angeordnet ist, zur gemeinsamen Drehung gekoppelt.

Um den Kupplungsbereich 28 für die Getriebeeingangswelle 40 einzurücken, wird die Anpressplatte 24 durch ein nicht dargestelltes Betätigungssystem über eine Kraftbeaufschlagungsanordnung 42 in Richtung auf die Zwischenplatte 20 zu belastet. Diese Kraftbeaufschlagungsanordnung 42 kann bei Aufbau dieses Kupplungsbereichs 28 als sogenannte Normal-Offen-Kupplung mehrere Hebelsegmente oder dergleichen umfassen, die an sich keinen eigenen Betätigungskraftbeitrag liefern. Grundsätzlich wäre aber auch der Einsatz einer Membranfeder oder dergleichen denkbar. Die Kraftbeaufschlagungsanordnung 42 überträgt die Einrückkraft auf die Anpressplatte 24 über eine Verschleißnachstellvorrichtung 44.

Um den Kupplungsbereich 26 einzurücken und somit ein Drehmoment auf die Getriebeeingangswelle 34 zu übertragen, ist eine allgemein mit 46 bezeichnete Kraftbeaufschlagungsanordnung des Kupplungsbereichs 26 vorgesehen. Diese Kraftbeaufschlagungsanordnung 46 umfasst ebenfalls bei Aufbau als sogenannte Normal-Offen-Kupplung mehrere Hebelsegmente 48 oder dergleichen, die sich, ebenso wie die Kraftbeaufschlagungsanordnung 42 des Kupplungsbereichs 28, bezüglich des Gehäuseteils 18 abstützen und über zwei beispielsweise topf- oder schalenartige Kraftübertragungselemente 50, 52, welche die Zwischenplatte 20 axial überbrücken, eine Betätigungskraft in Richtung zur Anpressplatte 22 leiten. Auch im Kraftübertragungsweg zwischen dieser Kraftbeaufschlagungsanordnung 46, nämlich dem Kraftübertragungselement 52 derselben, und der Anpressplatte 22 liegt eine allgemein mit 54 bezeichnete Verschleißausgleichsvorrichtung.

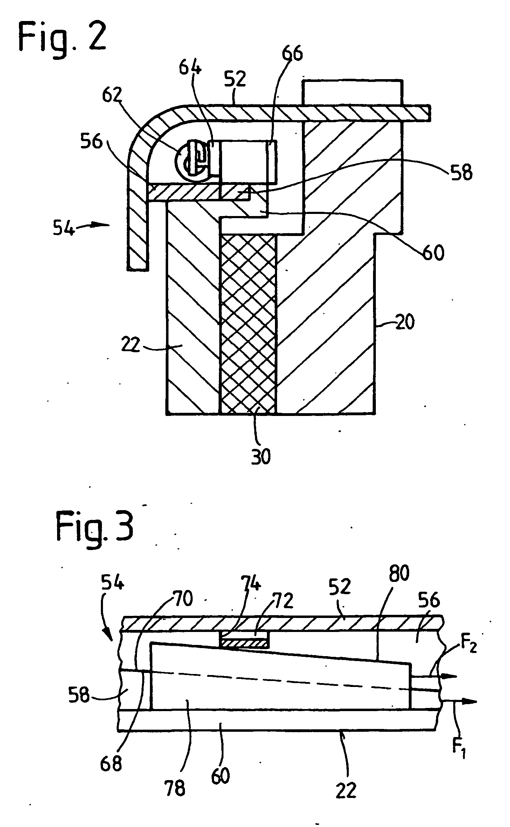

Der Aufbau und die Wirkungsweise dieser Verschleißausgleichsvorrichtung 54 werden nachfolgend auch mit Bezugnahme auf die Figuren 2 bis 5 detailliert beschrieben.

Die Verschleißnachstellvorrichtung 54 umfasst beispielsweise zwei zueinander axial gestaffelt liegende und die Anpressplatte 22 im Wesentlichen radial außen umgebend positionierte Nachstellringe 56, 58. Der Nachstellring 58 ist an einem nach radial außen greifenden Abstützbereich 60 der Anpressplatte 22 axial abgestützt. Der Nachstellring 56 wird zur Einrückkraftbeaufschlagung der Anpressplatte 22 durch das Kraftübertragungselement 52 axial beaufschlagt. Es ist eine beispielsweise als Schraubenzugfeder ausgebildete Vorspannfeder 62 vorhanden, die in einem Endbereich an einem Nietbolzen 64 eingehängt ist. Dieser Nietbolzen 64, der an einem nach radial außen greifenden Befestigungsabschnitt 66 der Anpressplatte 22 angebracht ist, kann gleichzeitig auch dazu dienen, die vorangehend bereits angesprochenen Tangentialblattfedern oder dergleichen mit der Anpressplatte 22 fest zu koppeln. In ihrem anderen Endbereich ist die Vorspannfeder 62 an dem am Abstützbereich 60 sich abstützenden Nachstellring 58 angebracht. Durch die Feder 62 wird somit eine in Fig. 3 kennbare Kraft F₁ erzeugt, welche versucht, den Nachstellring 58 in Umfangsrichtung zu drehen. Man erkennt in Fig. 3 weiter, dass die beiden axial aneinander anliegenden Nachstellringe 56, 58 jeweils im Bereich von Rampenflächen 68, 70 aneinander anliegen. Eine Verdrehung des Nachstellrings 58, induziert durch die Kraft F₁, hätte somit eine Vergrößerung der Gesamtaxialerstreckung der beiden aneinander anliegenden Nachstellringe 56, 58 und der durch diese im Wesentlichen bereitgestellten Verschleißnachstellvorrichtung 54 zur Folge.

Man erkennt in Fig. 1 weiter, dass an der Anpressplatte 22 ein beispielsweise durch eine Blattfeder oder dergleichen bereitgestelltes Erfassungselement 72 vorgesehen ist. Dieses erstreckt sich nach radial außen und greift durch eine Aussparung 74 des Nachstellrings 56 hindurch. Da das Erfassungselement 72 an der Anpressplatte 22 festgelegt ist, wird durch diesen Eingriff in die Aussparung 74 auch der Nachstellring 56 bezüglich der Anpressplatte 22 drehfest gehalten. Das Erfassungselement 72 streckt sich weiter nach radial außen und überlappt sich dort in radialer Richtung und auch in Umfangsrichtung mit einem an der Gehäuseanordnung 12 bzw. der Zwischenplatte 20 festgelegten Blockierelement 76.

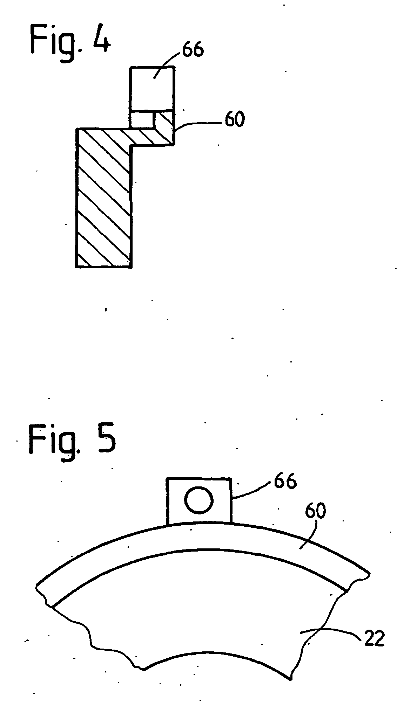

Es ist weiter ein als keilartiger Schieber ausgebildetes Arretierelement 78 vorgesehen. Dieses ist an der Außenumfangsseite der Nachstellringe 56, 58 angeordnet und wird beispielsweise durch die Abschnitte 66, welche in den Figuren 4 und 5 auch erkennbar sind, nach radial außen hin abgestützt. Auch für das Arretierelement 78 ist eine Vorspannfeder vorgesehen, die eine Kraft F₂ erzeugt, um auch dieses Bauteil zur Bewegung in Umfangsrichtung vorzuspannen. Hier kann beispielsweise vorgesehen sein, dass diese Vorspannfeder in einem Endbereich am Arretierelement 78 festgelegt ist und im anderen Endbereich an einem feststehenden Element, beispielsweise auch einem Nietbolzen 64 oder an der Vorspannfeder 62 in demjenigen Endbereich, in dem diese an dem Nachstellring 58 angebracht ist, festgelegt ist.

Durch die auf das Arretierelement 78 ausgeübte Umfangskraft F₂ wird dieses mit seinem Keilflächenbereich 80 in den zwischen dem Erfassungselement 72 und der Anpressplatte 12 bzw. dem Abstützbereich 60 gebildeten Zwischenraum gedrängt. Im normalen, nicht verschleißbehafteten Zustand, welcher in Fig. 3 gezeigt ist, presst das Kraftübertragungselement 52 über die beiden Nachstellringe 56, 58 die Anpressplatte 22 gegen die Reibbeläge 30. Das Erfassungselement 72 liegt am Nachstellring 56 auf, und das Arretierelement 78 ist in Umfangsrichtung zwischen dem Erfassungselement 72 und der Anpressplatte 22 geklemmt. Weiter weist das Erfassungselement 72 in seinem sich mit dem Blockierelement 76 sich überlappenden Bereich beispielsweise im Neuzustand auch bei eingerücktem Kupplungsbereich 26 noch einen zumindest geringen axialen Abstand auf.

Tritt ein Verschleiß in der Form auf, dass die axiale Dicke der Reibbeläge abnimmt, so wird bei Durchführung von Einkuppelvorgängen die Anpressplatte 22 sich näher an die Zwischenplatte 20 heranbewegen, als dies in einem neuen, nicht verschleißbehafteten Zustand der Fall ist. Dabei wird der Zustand auftreten, in dem das Erfassungselement 72 radial außen in Anlage am Blockierelement 76 kommt und somit zumindest in diesem radial äußeren Bereich der weiteren Axialverlagerung der Anpressplatte 22 nicht folgen kann. Das Erfassungselement 72 bewegt sich also bereichsweise axial bezüglich der Anpressplatte, so dass der axiale Zwischenraum zwischen dem Erfassungselement 72 und dem Stützbereich 60 dort, wo das Arretierelement 78 positioniert ist, zunimmt. Im Zuge dieser Relativbewegung des Erfassungselements 72 bezüglich der Anpressplatte 22 hebt das Erfassungselement 72 also von dem Nachstellring 56 ab, und auf Grund des größer werdenden Zwischenraums zwischen diesem Erfassungselement 72 und dem Abstützbereich 60 kann das Arretierelement 78 durch die Einwirkung der Kraft F₂ sich entsprechend in Umfangsrichtung verlagern. Da in diesem Zustand der Nachstellring 56 weiterhin unter der Beaufschlagung des Kraftübertragungselements 52 steht, kann er sich auch trotz der Tatsache, dass er an einer Bewegung in axialer Richtung durch das Erfassungselement 72 nicht mehr gehindert ist, nicht bewegen. Andererseits kann auch das Erfassungselement 72 durch das in Umfangsrichtung geringfügig verlagerte Arretierelement 78 sich nicht mehr in seine Ausgangslage zurückbewegen.

Bei einem nachfolgenden Ausrückvorgang, bei welchem das Kraftübertragungselement 52 seine Anpresswirkung zumindest teilweise aufhebt, ist die Einspannung der Nachstellringe 56, 58 zwischen der Anpressplatte 22 und dem Kraftübertragungselement 52 beispielsweise definiert durch die Lüftkraft, welche durch die Tangentialblattfedern oder dergleichen bereitgestellt werden kann. Da diese Lüftkraft jedoch wesentlich geringer ist, als die durch die Kraft F₁ erzeugte Tendenz der Nachstellringe 56, 58, sich in Umfangsrichtung bezüglich einander verdrehen zu wollen, tritt nunmehr diese Drehbewegung auf. Sie wird im dargestellten Beispiel so lange anhalten, bis der Nachstellring 56 im Bereich der Aussparung 74 wieder an dem Erfassungselement 72 anstößt, das durch das Arretierelement 78 weiterhin in derjenigen Lage bezüglich der Anpressplatte 22 gehalten wird, die es zuvor durch Anstoßen am Blockierelement 76 eingenommen hat. Dies bedeutet also, dass durch die Umfangsbewegung des Nachstellrings 58 nunmehr die axiale Länge der Verschleißnachstellvorrichtung so vergrößert worden ist, dass damit die Dickenabnahme der Reibbeläge 30 kompensiert worden ist. Bei einem nachfolgend durchzuführenden Einrückvorgang hat also vor allem das Kraftübertragungselement 52 und somit die gesamte Kraftbeaufschlagungsanordnung 46 des Kupplungsbereichs 26 exakt wieder diejenige Einbaulage, die auch im Neuzustand vorhanden war.

Bei der vorangehend beschriebenen Doppelkupplung bzw. den für den Verschleißausgleich sorgenden Komponenten des Kupplungsbereichs 54 wird eine axial sehr klein gebaute Anordnung geschaffen, und zwar dadurch, dass diejenigen Komponenten, welche wesentlichen Bauraum in axialer Richtung beanspruchen, zueinander radial gestaffelt positioniert sind und somit sich in axialer Richtung in erheblichem Maße überlappen können. Dabei ist vorzugsweise auch vorgesehen, dass beispielsweise das Arretierelement 78 in Umfangsrichtung versetzt positioniert ist zur Vorspannfeder 62 für den Nachstellring 58, um ein gegenseitiges Stören bzw. Überlappen dieser Komponenten zu vermeiden. Weiterhin ist es selbstverständlich, dass bei der vorangehend beschriebenen Ausgestaltungsform, ebenso wie bei den nachfolgend noch zu beschreibenden Ausgestaltungsformen, die Verschleißnachstellvorrichtung 54 nur einen einzigen Nachstellring umfassen kann, der dann in Umfangsrichtung bewegbar ist, an einer axialen Seite durch das Kraftübertragungselement 52 beaufschlagt wird und an der anderen axialen Seite mit seiner Keilfläche oder seinen Keilflächen an komplementären Flächen abgestützt ist, die unmittelbar an der Anpressplatte 22, also beispielsweise dem Abstützbereich 60 bereitgestellt sind. Auf diese Art und Weise lässt sich weiterer axialer Bauraum einsparen. Selbstverständlich ist es auch möglich, an Stelle der dargestellten bzw. beschriebenen Nachstellringe auch einzelne keilartige Schieberelemente bereitzustellen. Auf Grund der Fliehkrafteinwirkung ist jedoch insbesondere bei der radialen Staffelung das Vorsehen ringartig geschlossener Nachstellelemente vorteilhaft. Weiterhin sei darauf hingewiesen, dass es grundsätzlich auch möglich ist, die radiale Staffelung so vorzusehen, dass die Nachstellringe an der Innenumfangsseite der ringscheibenartig ausgebildeten Anpressplatte 22 positioniert sind. Dies erfordert jedoch eine entsprechend angepasste Positionierung bzw. Ausgestaltung des Kraftbeaufschlagungselements 52. Weiter wird darauf hingewiesen, dass selbstverständlich auch die für den Kupplungsbereich 28 vorgesehene Verschleißnachstellvorrichtung 44 mit den zugeordneten Komponenten, welche grundsätzlich so arbeiten bzw. aufgebaut sein können, wie vorangehend mit Bezug auf die Nachstellvorrichtung 54 beschrieben, gemäß den Prinzipien der vorliegenden Erfindung radial gestaffelt zur Anpressplatte 24 positioniert sein können. Beim Kupplungsbereich 28 wäre hier grundsätzlich auch an die vorangehend beschriebene Anordnung der Nachstellringe oder eines Nachstellrings oder dergleichen an der Innenumfangsseite der Anpressplatte 24 denkbar, da hier wesentliche Änderungen im Bereich der Kraftbeaufschlagungsanordnung 42 und ein gegenseitiges Stören mit anderen sich drehenden bzw. nicht mitdrehenden Komponenten nicht vorhanden sind.

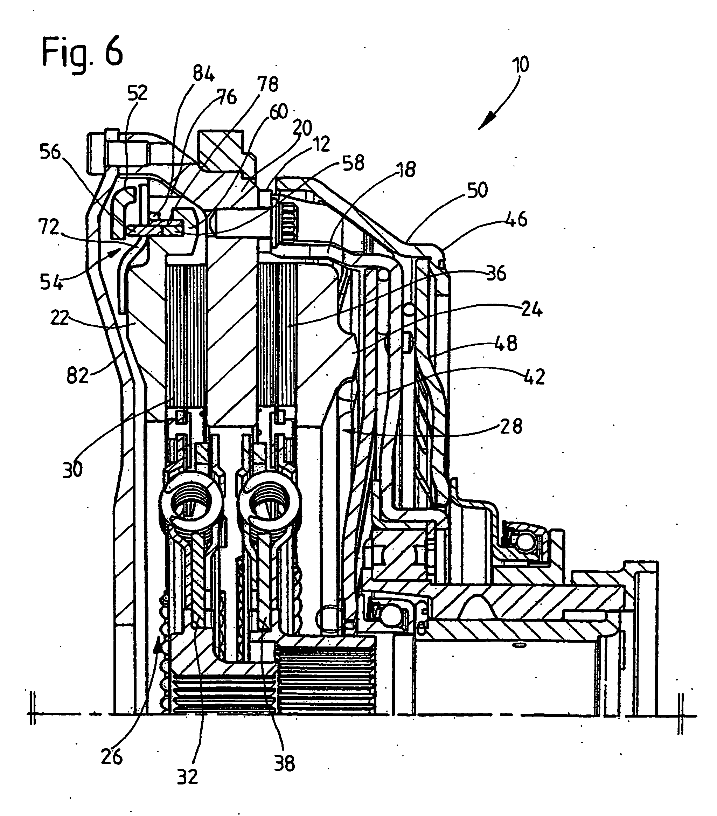

Eine abgewandelte Ausgestaltungsform der vorangehend beschriebenen Doppelkupplung ist in Fig. 6 gezeigt. Auch bei der in Fig. 6 gezeigten Doppelkupplung 10 bildet die Zwischenplatte 20 ein Widerlager für die beiden Kupplungsbereiche 26 und 28. Hier ist jedoch die Anbindung der Doppelkupplung 10 bzw. der Gehäuseanordnung 12 derselben direkt über die Zwischenplatte 20 bzw. daran vorgesehene Abschnitte vorgesehen, die über eine Flexplatte 82 oder dergleichen an die nicht dargestellte Antriebswelle drehfest angebunden sind. Auch hier sind jedoch beidseits der Zwischenplatte 20 die beiden Anpressplatten 22, 24 vorgesehen. Während hier bei der Anpressplatte 24 des Kupplungsbereichs 28 keine Verschleißnachstellvorrichtung dargestellt ist, ist in Zuordnung zur Anpressplatte 22 wieder die vorangehend detailliert beschriebene Verschleißnachstellvorrichtung 54 mit den zugeordneten Komponenten vorgesehen. Man erkennt, dass der Abstützbereich 60 an der Anpressplatte 22 einen Abschnitt aufweist, der den Nachstellring 58 und auch das Arretierelement 78 an der Außenseite übergreift und somit eine Radialabstützung für das in Umfangsrichtung nur beschränkt sich erstreckende Arretierelement 78 bereitstellt. Ferner ist am Erfassungselement 72 ein beispielsweise durch Ausstanzen und Umbiegen einer Lasche gebildeter Radialabstützvorsprung 84 gebildet, der an der anderen axialen Seite das Arretierelement 78 nach radial außen hin abstützt. Das Blockierelement 76 ist hier als integraler Bestandteil der ebenfalls als Bestandteil der Gehäuseanordnung 12 zu betrachtenden Zwischenplatte 20 ausgeführt. Hinsichtlich Aufbau, Funktionsweise und möglicher Variation entspricht jedoch die in Fig. 6 gezeigte Ausgestaltungsform der vorangehend beschriebenen. Auch hier sei darauf hingewiesen, dass selbstverständlich in Zuordnung zur Anpressplatte 20 eine Verschleißnachstellvorrichtung vorgesehen sein kann, die nach den Prinzipien der vorliegenden Erfindung aufgebaut ist, also mit radialer Staffelung der Anpressplatte 20 und eines Nachstellelements, welches hier wiederum beispielsweise an der Innenumfangsseite der Anpressplatte 20 positioniert sein könnte.

Es sei darauf hingewiesen, dass vorangehend Ausgestaltungsformen beschrieben worden sind, bei welchen das Ausmaß der Umfangsbewegung desjenigen Nachstellrings 58, der zur Verschleißkompensation sich verdrehen kann, vorgegeben ist durch den vermittels des Erfassungselements 52 gebildeten Anschlag für diesen oder ggf. den zusätzlichen Nachstellring 56. Grundsätzlich ist es auch denkbar, am Arretierelement 78 einen Drehblockierabschnitt vorzusehen, der in eine zugeordnete Aussparung des zur Verschleißkompensation drehbaren Nachstellrings mit Umfangsbewegungsspiel eingreift. Die Anordnung ist dann weiterhin so, dass das Erfassungselement 72 beispielsweise mit dem Nachstellring 56 überhaupt nicht zur Axialbewegungsblockierung zusammenwirken kann, sondern dass eine Drehbewegung beispielsweise des Nachstellrings 58 bzw. das Ausmaß dieser Drehbewegung vorgegeben ist durch das Zusammenwirken des Blockierabschnitts am Arretierelement und der entsprechenden Aussparung in diesem Nachstellring 58. Bei dieser Ausgestaltungsform wirkt also das Erfassungselement 72 nur mit dem keilartig ausgestalteten Arretierelement 78 und dem Blockierelement 76 zusammen, während das Arretierelement 78 zum Blockieren des in Umfangsrichtung verdrehbaren Nachstellrings 58 mit diesem unmittelbar zusammenwirkt. Auf diese Art und Weise wird es möglich, eine Entkopplung zwischen dem Ausmaß der Axialverlagerung zwischen dem Erfassungselement 72 und der Anpressplatte 22 einerseits und dem Ausmaß der Umfangsdrehbewegung des dazu vorgesehenen Nachstellrings andererseits zu erlangen. Dies ermöglicht eine definierte Überkompensation oder eine definierte Unterkompensation des aufgetretenen Verschleißes bzw. bei gekrümmter Ausgestaltung der in Fig. 3 erkennbaren Keilfläche 80 des Arretierelements 78 eine Veränderung des Kompensationsverhaltens über die Betriebslebensdauer hinweg.

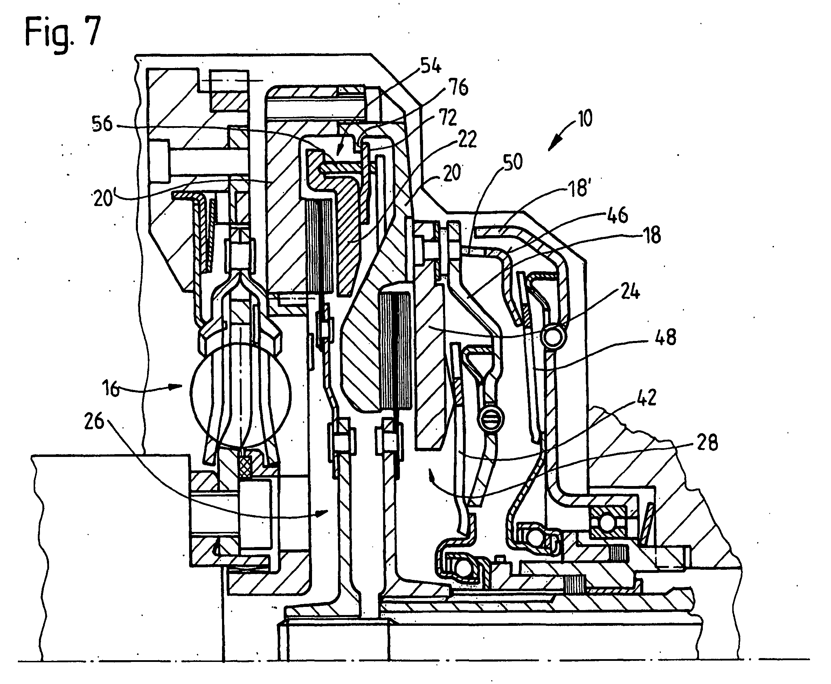

In Fig. 7 ist eine weitere Ausgestaltungsform einer erfindungsgemäßen Doppelkupplungsanordnung 10 gezeigt. Man erkennt, dass bei der Ausgestaltungsform gemäß Fig. 7 die Zwischenplatte 20 nur das Widerlager für den Kupplungsbereich 28 bildet. Für den Kupplungsbereich 26 ist eine radial außen mit der Zwischenplatte 20 durch Verschraubung oder dergleichen fest verbundene und eine Sekundärmasse der Torsionsschwingungsdämpferanordnung 16 bildende Schwungplatte 20' als Widerlager vorgesehen. Mit der Zwischenplatte 20 sind nunmehr zwei Gehäuseteile 18, 18' an der gleichen axialen Seite fest verbunden, an welchen die beiden Hebelanordnungen bzw. Kraftbeaufschlagungsanordnungen 42, 48 der beiden Kupplungsbereiche 28, 26 in ihrem jeweiligen radial äußeren Bereich abgestützt sind.

Daraus resultiert, dass zur Erlangung des Einrückzustands die beiden Anpressplatten 22, 24 der beiden Kupplungsbereiche 26, 28 in der gleichen axialen Richtung, nämlich in Richtung auf das jeweilige Widerlager 20 bzw. 20' zu zu pressen sind. Während dies beim Kupplungsbereich 28 direkt über die Kraftbeaufschlagungsanordnung 42 erfolgt, ist für den Kupplungsbereich 26 bzw. die Anpressplatte 22 desselben die Kraftbeaufschlagungsanordnung 46 mit den Hebelsegmenten 48 oder dergleichen und einem die Zwischenplatte 20 axial überbrückenden Kraftübertragungselement 50 vorgesehen. Dieses wirkt auf die Anpressplatte 22 über eine Verschleißnachstellvorrichtung 54 ein, deren Aufbau so wie vorangehend detailliert beschrieben sein kann. Insbesondere erkennt man bei dieser Ausgestaltungsform, dass die Verschleißnachstellvorrichtung 54 nur noch einen einzigen Nachstellring 56 aufweist, der mit seinen Schrägflächen an entsprechenden Schrägflächen der Anpressplatte 22 abgleitet. Der Anschlag bzw. das Blockierelement 76 ist nunmehr mit der Zwischenplatte 20 integral ausgebildet.

Es ist selbstverständlich, dass auch für den Kupplungsbereich 28 eine derartige zwischen der Anpressplatte 24 und den Hebelsegmenten bzw. der Kraftbeaufschlagungsanordnung 42 desselben wirkende Verschleißnachstellvorrichtung vorgesehen sein kann, wie dies vorangehend auch geschildert wurde.

## Patentansprüche

1. Reibungskupplung, umfassend:
- eine Gehäuseanordnung (12),
- eine in der Gehäuseanordnung (12) in Richtung einer Drehachse (A) bewegbar gehaltene Anpressplatte (22, 24),
- eine sich bezüglich der Gehäuseanordnung (12) und der Anpressplatte (22) abstützende Kraftbeaufschlagungsanordnung (46),
- eine Verschleißnachstellvorrichtung (54) im Kraftübertragungsweg zwischen der Anpressplatte (22) und der Kraftbeaufschlagungsanordnung (46), umfassend wenigstens ein zur Verschleißnachstellung verlagerbares Nachstellelement (56, 58),
- ein an der Anpressplatte (22) vorgesehenes Erfassungselement (72), das mit einem Erfassungsabschnitt bei Auftreten von Verschleiß in Anlage an einem Anschlag (76) kommen kann und dabei bezüglich der Anpressplatte (22) bewegbar ist,
- ein keilartiges Arretierelement (78), welches das Erfassungselement (78) nach Bewegung bezüglich der Anpressplatte (22) gegen Rückbewegung arretiert, wobei das Arretierelement (78) durch eine Vorspannanordnung (F₂) in Richtung zu einem das Erfassungselement (72) gegen Rückbewegung arretierenden Zustand vorgespannt ist, **dadurch gekennzeichnet, dass**
das wenigstens eine Nachstellelement (56, 58) und die Anpressplatte (22) bezüglich einander radial gestaffelt angeordnet sind.

2. Reibungskupplung nach Anspruch 1,
**dadurch gekennzeichnet, dass** das wenigstens eine Nachstellelement (56, 58) radial außen bezüglich der Anpressplatte (22) angeordnet ist.

3. Reibungskupplung nach Anspruch 1 oder 2,
**dadurch gekennzeichnet, dass** das wenigstens eine Nachstellelement (56, 58) ein Nachstellring (56, 58) ist.

4. Reibungskupplung nach einem der Ansprüche 1 bis 3,
**dadurch gekennzeichnet, dass** an der Anpressplatte (22) wenigstens ein das wenigstens eine Nachstellelement (56, 58) axial stützender und radial vorspringender (60) Stützbereich vorgesehen ist.

5. Reibungskupplung nach einem der Ansprüche 1 bis 4,
**dadurch gekennzeichnet, dass** der Anschlag (76) bezüglich der Gehäuseanordnung (12) feststeht.

6. Reibungskupplung nach einem der Ansprüche 1 bis 5,
**dadurch gekennzeichnet, dass** eine Zwischenplatte (26) vorgesehen ist, an deren beiden axialen Seiten jeweils eine Anpressplatte (22, 24) eines jeweiligen Kupplungsbereichs (26, 28) einer Doppelkupplung vorgesehen ist, wobei die Zwischenplatte (20) für wenigstens einen Kupplungsbereich (26, 28) ein Widerlager bildet, wobei jeder Anpressplatte (22, 24) eine Kraftbeaufschlagungsanordnung (46, 42) zugeordnet ist und im Kraftübertragungsweg zwischen wenigstens einer Anpressplatte (22, 24) und der zugeordneten Kraftbeaufschlagungsanordnung (46, 42) eine Verschleißnachstellvorrichtung (54, 44) mit zugeordnetem Arretierelement (78) und Erfassungselement (72) vorgesehen ist.

7. Reibungskupplung nach Anspruch 6,
**dadurch gekennzeichnet, dass** eine (46) der Kraftbeaufschlagungsanordnungen (46, 42) die Zwischenplatte (20) axial überbrückt und dass wenigstens im Kraftübertragungsweg zwischen dieser Kraftbeaufschlagungsanordnung (46) und der **dadurch** beaufschlagten Anpressplatte (22) eine Verschleißnachstellvorrichtung (54) mit zugeordnetem Arretierelement (78) und Erfassungselement (72) vorgesehen ist.

## Claims

1. Friction clutch, comprising:
- a housing arrangement (12),
- a pressure plate (22, 24) which is held in the housing arrangement (12) such that it can move in the direction of a rotational axis (A),
- a force application arrangement (46) which is supported with regard to the housing arrangement (12) and the pressure plate (22),
- a wear-adjustment apparatus (54) in the force transmission path between the pressure plate (22) and the force application arrangement (46), comprising at least one adjusting element (56, 58) which can be displaced for wear adjustment,
- a sensing element (72) which is provided on the pressure plate (22) and a sensing section of which can come into contact with a stop (76) if wear occurs and in the process can be moved with regard to the pressure plate (22),
- a wedge-like locking element (78) which locks the sensing element (72) against return movement after movement with regard to the pressure plate (22), the locking element (78) being prestressed by a prestressing arrangement (F₂) in the direction towards a state which locks the sensing element (72) against return movement,
**characterized in that** the at least one adjusting element (56, 58) and the pressure plate (22) are arranged radially staggered with regard to one another.

2. Friction clutch according to Claim 1, **characterized in that** the at least one adjusting element (56, 58) is arranged radially on the outside with regard to the pressure plate (22).

3. Friction clutch according to Claim 1 or 2, **characterized in that** the at least one adjusting element (56, 58) is an adjusting ring (56, 58).

4. Friction clutch according to one of Claims 1 to 3, **characterized in that** at least one supporting region (60) which supports the at least one adjusting element (56, 58) axially and protrudes radially is provided on the pressure plate (22).

5. Friction clutch according to one of Claims 1 to 4, **characterized in that** the stop (76) is fixed in place with regard to the housing arrangement (12).

6. Friction clutch according to one of Claims 1 to 5, **characterized in that** an intermediate plate (26) is provided, on the two axial sides of which in each case one pressure plate (22, 24) of a respective clutch region (26, 28) of a dual clutch is provided, the intermediate plate (20) forming an abutment for at least one clutch region (26, 28), each pressure plate (22, 24) being assigned a force application arrangement (46, 42), and a wear-adjustment apparatus (54, 44) with an associated locking element (78) and a sensing element (72) being provided in the force transmission path between at least one pressure plate (22, 24) and the associated force application arrangement (46, 42).

7. Friction clutch according to Claim 6, **characterized in that** one (46) of the force application arrangements (46, 42) bridges the intermediate plate (20) axially, and **in that** a wear-adjustment apparatus (54) with an associated locking element (78) and a sensing element (72) is provided at least in the force transmission path between the said force application arrangement (46) and the pressure plate (22) on which it acts.

## Revendications

1. Embrayage à friction comprenant:
- un dispositif formant carter (12) ;
- un plateau de pression (22, 24) maintenu de manière mobile dans le dispositif formant carter (12) dans le sens d'un axe de rotation (A) ;
- un dispositif d'actionnement par force (46) s'appuyant relativement au dispositif formant carter (12) et au plateau de pression (22) ;
- un équipement de rattrapage d'usure (54) dans une course de transfert de force entre le plateau de pression (22) et le dispositif d'actionnement par force (46), comprenant au moins un élément de rattrapage (56, 58) pouvant translater pour rattraper l'usure ;
- un élément de détection (72) prévu sur le plateau de pression (22), lequel élément peut venir en contact sur une butée (76) avec un tronçon de détection en cas d'apparition d'usure dans le système et qui est donc mobile par rapport au plateau de pression (22) ;
- un élément de blocage du type coin (78) qui bloque l'élément de détection (78) après un mouvement par rapport au plateau de pression (22) pour l'empêcher de reculer, l'élément de blocage (78) étant précontraint par un dispositif de précontrainte (F₂) dans le sens d'un état bloquant l'élément de détection (72) pour l'empêcher de reculer,
**caractérisé en ce qu'**au moins un élément de rattrapage (56, 58) et le plateau de pression (22) sont disposés de manière décalée radialement l'un par rapport à l'autre.

2. Embrayage à friction selon la revendication 1, **caractérisé en ce qu'**au moins un élément de rattrapage (56, 58) est disposé radialement à l'extérieur par rapport au plateau de pression (22).

3. Embrayage à friction selon la revendication 1 ou 2, **caractérisé en ce qu'**au moins un élément de rattrapage (56, 58) est une bague de rattrapage (56, 58).

4. Embrayage à friction selon l'une quelconque des revendications 1 à 3, **caractérisé en ce qu'**on a prévu sur le plateau de pression (22) au moins une zone d'appui supportant axialement au moins ledit élément de rattrapage (56, 58) et faisant saillie radialement (60).

5. Embrayage à friction selon l'une quelconque des revendications 1 à 4, **caractérisé en ce que** la butée (76) est solidaire par rapport au dispositif formant carter (12).

6. Embrayage à friction selon l'une quelconque des revendications 1 à 5, **caractérisé en ce qu'**on a prévu un plateau intermédiaire (26) sur les deux côtés axiaux duquel on a prévu un plateau de pression (22, 24) d'une zone d'accouplement (26, 28) respective d'un embrayage double, le plateau intermédiaire (20) formant un appui pour au moins une zone d'accouplement (26, 28), chaque plateau de pression (22, 24) étant associé à un dispositif d'actionnement par force (46, 42) et, dans la course de transfert de force entre au moins un plateau de pression (22, 24) et le dispositif associé d'actionnement par force (46, 42), un équipement de rattrapage d'usure (54, 44) étant prévu avec un élément de blocage (78) associé et un élément de détection (72).

7. Embrayage à friction selon la revendication 6, **caractérisé en ce que** l'un (46) des dispositifs d'actionnement par force (46, 42) recouvre axialement le plateau intermédiaire (20) et **en ce qu'**au moins dans la course de transfert de force entre ce dispositif d'actionnement par force (46) et le plateau de pression (22) ainsi actionné, on a prévu un équipement de rattrapage d'usure (54) avec un élément de blocage (78) associé et un élément de détection (72).
